**Europäisches Patentamt**

**European Patent Office**

**Office européen des brevets**

(11) Publication number: **0 226 175**
**B1**

(12) # EUROPEAN PATENT SPECIFICATION

(45) Date of publication of patent specification: **30.05.90**

(51) Int. Cl.⁵: **A 23 K 1/17**

(21) Application number: **86117193.2**

(22) Date of filing: **10.12.86**

(54) Process for preparing an improved composition of the zinc salt of bacitracin for veterinary use as growth promoter.

(30) Priority: **19.12.85 YU 1997/85**

(43) Date of publication of application:
**24.06.87 Bulletin 87/26**

(45) Publication of the grant of the patent:
**30.05.90 Bulletin 90/22**

(84) Designated Contracting States:
**AT BE DE ES FR GB IT NL**

(56) References cited:
**EP-A-0 019 809**
**DE-A-3 422 782**
**US-A-4 164 572**

(73) Proprietor: **KRKA, tovarna zdravil, n.sol.o**
**Cesta herojev 45**
**YU-68000 Novo Mesto (YU)**

(72) Inventor: **Petravic, Janko**
**Kristanova 26**
**YU-68000 Novo Mesto (YU)**
Inventor: **Pokorny, Miroslav, Dr.**
**Cankarjeva 11**
**YU-68000 Novo Mesto (YU)**
Inventor: **Cimerman, Rado**
**Ragovska 35**
**YU-68000 Novo Mesto (YU)**
Inventor: **Repse, Joze**
**Slavka Gruma 16**
**YU-68000 Novo Mesto (YU)**
Inventor: **Bernik, Janez**
**Pod Trsko goro 17**
**YU-68000 Novo Mesto (YU)**

(74) Representative: **Patentanwälte Müller-Boré,**
**Deufel, Schön, Hertel, Lewald, Otto**
**Postfach 26 02 47 Isartorplatz 6**
**D-8000 München 26 (DE)**

Courier Press, Leamington Spa, England.

# Description

The present invention relates to a process for preparing an improved composition of the zinc salt of bacitracin for veterinary use as growth promoter (feed grade) from a broth fermented by means of Bacillus licheniformis, to that improved composition as well as to its use.

The obtained composition is better suitable for preparing food mixtures since it is more stable in fodder than the standard, hitherto used pulverulent forms and is more appropriate from the ecological point of view since it is not pulverulent.

The manufacture of such a composition is very simple and economically advantageous.

The antibiotic bacitracin is used in the form of its zinc, manganese or methylendisalicylate salt, feed grade, for the industrial preparation of fodder. Said antibiotic also acts as growth promoter. Into food it is added in small (subtherapeutic) quantities. It is a characteristic of this antibiotic that its activity quite rapidly fades in ready-for-use strong and especially pelleted fodder. Therefore shelf life of such food is up to one month. Besides, presently used pulverulent feed grade compositions have an unpleasant odour and, owing to their pulverulence, cause ecological problems in plants for mixing fodder.

US—A—4 164 572 describes a process for making a zinc bacitracin composition for veterinary use as a growth promotor, according to which process zinc bacitracin is precipitated from a fermentation broth to form a slurry, finely divided calcium carbonate is added thereto and after blending the mixture is spray-dried at a temperature of between 300 to 450°C to produce particles a major weight percentage of which has a size of 30 to 149 μm. The stability of the product obtained by the process according to US—A—4 164 572 however is not satisfactory.

Thus, the aim of this invention has been to provide a less pulverulent and more stable form of bacitracin feed grade compositions.

Granulated forms of active substances have been used on a larger scale since 1970 when the first allergies to pulverulent forms of enzymes in detergent production appeared. Since then the producers of enzymes, antibiotics, vitamins and similar substances have developed various granulating methods, e.g. applying to solid inert carriers, binding to ion active resins or alumosilicates, drying the liquid concentrates in fluid bed driers or in special spray driers with the addition of different binders (Aunstrup, Microbial Technology, Ed. Pepler and Perlman, New York 1979).

Bacitracin has also been found to bentonite (U.S. Patent 2,582,921), but quite recently, Boehringer (a West German company) has developed a process for preparing a granulated and more stable form of bacitracin by using fluid bed drying and granulating techniques with hydroxypropyl methyl cellulose as a binder (West German Patent Application 34 22 782.2).

All these methods, however, are very complicated as to the required equipment, energy and time, consequently, these processes are very expensive and are not suitable, for cheaper compositions in common use. Therefore the inventors have tried to find a simpler and less expensive process for preparing a granulated (and non-pulverulent) form of bacitracin.

The drop of antibiotic activity in food is smaller for 10 to 40% if the granulated composition is blended into the same mixtures as the pulverulent composition. The size of the difference in stability especially depends on the storage temperature, the fodder composition and on its form (farinaceous or pelleted).

Bacitracin in granular form is more stable in food because granules have a smaller contact surface-area. The drop of bacitracin activity in food prepared with the granulate according to the invention, is for 10 to 40% smaller than in food prepared with bacitracin powder. The effects causing the activity drop are reduced. It is well-known from literature that the following factors cause a faster decomposition of the bacitracin molecule: the effect of oxidation of the antibiotic bacitracin in the form of a salt suitable for animal food; interaction of some substances from the food, e.g. fats, proteins, microelements, with the antibiotic molecule; interaction with water from the food ingredients with a humidity of about 12%.

The above factors could also be avoided by producing coated granules or similar structures by mechanical or chemical operations, which would be a very sophisticated and expensive process.

For preparing granulates two techniques are used, i.e.

A) compacting—the pulverulent, correspondingly treated material is mechanically pressed to obtain flakes, which are cooled, ground and sieved to a standardized particle size, or

B) pelleting—the pulverulent material is conditioned by means of steam, mechanically compressed and the pellets are cooled.

The obtained pellets are ground (granulated) and standardized by sieving.

The stability of the commercial products however is still not satisfactory.

Thus the object of the invention is a process for preparing granulated, non-pulverulent forms of the Zn salt of bacitracin, feed grade, being better stable in fodder, wherein to a raw pulverulent composition of feed grade Zn salt of bacitracin, obtained by adding zinc ions at a pH from 6.5 to 7 to the fermentation broth of Bacillus licheniformis immediately after fermentation, centrifugating for concentration of Zn bacitracin, by separation and drying the heavy portion, containing the antibiotic, by spray-drying at an input temperature of 160 to 250°C, there are added and blended to homogeneity: $CaCO_3$ up to the commercial activity of about 70%, optionally lignosulfonate to 3% or starch to 70% or dextrose to 10% or hydroxypropyl methyl cellulose to 6% or soya meal to 50% under the corresponding reaction of the added $CaCO_3$; the whole is mechanically pressed either by compacting, cooling down the obtained flakes, grinding and sieving to the desired particle size of 0.15 to 1.25 mm, or by pelleting a mass that has been conditioned with steam at a temperature from 50 to 70°C to a humidity of 12 to 17%, cooling down the obtained pellets, grinding and sieving the desired particle size of 0.15 to 1.25 mm. The pressing is accomplished by compacting the material between two rotating rolls, whereat the temperature of the material rises to 40—50°C. Zn ions, e.g. as $ZnSO_4$, are added in a concentration of 0.3 to 0.6 g of Zn ions/g of bacitracin.

The above-mentioned percent amounts of additives relate to the whole mass of the blend of the pulverulent composition.

At both techniques the yield is practically 100%.

The new composition according to the invention is used for the preparation of fodder on industrial scale in the hitherto known concentrations of 5 to 100 ppm.

Example 1

To 66 m³ of bacitracin broth, i.e. fermentation broth of the microorganism Bacillus licheniformis, after completed fermentation with a yield of 599 IU/ml (IU=International Unit) and 6.0% of dry substance, there are added 800 kg of $ZnSO_4 \cdot 7 H_2O$ and it is stirred for one hour. Thereupon the pH is corrected with a 25% $NH_4OH$ solution to a pH range of 6.5 to 7.0. The broth treated in such a manner is separated on a centrifugal separator (e.g. Westfalia Company) to obtain 23 m³ of a heavy fraction and 43 m³ of a light fraction. The heavy fraction is dried on a spray drier at the input temperature of 220°C and the output temperature of 85°C and there are obtained 2800 kg of a product with a bacitracin content of 25.4% and a humidity of 3.19%. The yield amounts to 75%. The obtained product is blended with 755 kg $CaCO_3$ to a commercial activity of 20%. This blend is then compacted to obtain flakes 8×1×0.5 cm, which are cooled down to room temperature. The cooled flakes are ground into a granulate and the pulverulent fraction (particle size under 0.15 mm) is removed by sieving. The activity of the sieved composition is 20%, i.e. unchanged.

Example 2

To 66 m³ of bacitracin broth after completed fermentation with a yield of 630 IU/ml and 6.2% of dry substance, there are added 800 kg of $ZnSO_4 \cdot 7 H_2O$ and it is stirred for one hour. Thereafter the pH is corrected with a 25% $NH_4OH$ solution to a pH range of 6.5 to 7.0. The broth treated in such a manner is separated on a centrifugal separator to obtain 24 m³ of a heavy fraction and 42 m³ of a light fraction. The heavy fraction is dried in a spray drier at the input temperature of 200°C and output temperature of 90°C. There are obtained 2900 kg of a composition with an activity of 26.2% and humidity 3.3%. The yield amounts to 76.8%. The obtained product is blended with 899 kg of ground $CaCO_3$ to a commercial activity of 20%. This blend is then for a short time conditioned with steam at a temperature of 60 to 70°C to a humidity of 12 to 17% and mechanically pressed through a matrix to obtain agglomerates in the form of pellets. Their size depends on the diameter of the holes in the matrix. Pellets are air-cooled to room temperature. The cooled pellets are ground and sieved to obtain a fraction with a particle size of 0.15 to 1.25 mm as the standard form. The bacitracin content in the sieved composition is 20%, i.e. unchanged.

Example 3

It is operated as in Example 1 with the only exception that $ZnSO_4 \cdot 7 H_2O$ in the amount of 20 kg/m³ of fermentation broth is added.

Example 4

It is operated as in Example 2 with the only exception that $ZnSO_4 \cdot 7 H_2O$ in the amount of 20 kg/m³ of fermentation broth is added.

Example 5

It is operated as in Example 2 with the only exception that 3% of lignosulfonate are added into the blend before pelleting, the addition of $CaCO_3$ being correspondingly reduced.

Example 6

It is operated as in Example 2 with the only exception that 6% of hydroxypropyl methyl cellulose are added into the blend before pelleting, the addition of $CaCO_3$ being correspondingly reduced.

Example 7

It is operated as in Example 1 with the only exception that 2% of starch are added into the blend before compacting, the addition of $CaCO_3$ being correspondingly reduced.

Example 8

It is operated as in Example 2 with the only exception that 3% of starch are added into the blend before pelleting, the addition of $CaCO_3$ being correspondingly reduced.

Example 9

It is operated as in Example 1 with the only exception that 5% of dextrose are added into the blend before compacting, the addition of $CaCO_3$ being correspondingly reduced.

Example 10

It is operated as in Example 2 with the only exception that 10% of dextrose are added into the blend before pelleting, the addition of $CaCO_3$ being correspondingly reduced.

Example 11

It is operated as in Example 1 with the only exception that 20% of soya meal are added into the blend before compacting, the addition of $CaCO_3$ being correspondingly reduced.

Example 12

It is operated as in Example 2 with the only exception that 20% of soya meal are added into the blend before pelleting, the addition of $CaCO_3$ being correspondingly reduced.

In Examples 3 to 12 there are obtained products according to the invention, which are practically equivalent to products of Examples 1 and 2. Only additives vary depending on the use and requirements of the consumer. Thus e.g. the addition of lignosulfonates improves the yield at grinding and sieving, whereas with a greater addition of $CaCO_3$ and $ZnSO_4$ there is achieved a greater stability of the antibiotic and more solid granulates are obtained.

**Claims**

1. Process for preparing an improved composition of the zinc salt of bacitracin for veterinary use as growth promoter, characterized in that to a raw pulverulent composition of feed grade Zn salt of bacitracin, obtained by adding zinc ions at a pH from 6.5 to 7 to the fermentation broth of Bacillus licheniformis immediately after fermentation, centrifugating for concentration of Zn bacitracin, by separating and drying the heavy portion, containing the antibiotic, by spray-drying at an input temperature of 160 to 250°C, there are added and blended to homogeneity: $CaCO_3$ up to the commercial activity of about 70%, optionally lignosulfonate to 3% or starch to 70% or dextrose to 10% of hydroxypropyl methyl cellulose to 6% or soya meal to 50% under the corresponding reduction of the added $CaCO_3$; the whole is mechanically pressed either by compacting, cooling down the obtained flakes, grinding and sieving to the desired particle size of 0.15 to 1.25 mm, or by pelleting a mass that has been conditioned with steam at a temperature from 50 to 70°C to a humidity of 12 to 17%, cooling down the obtained pellets, grinding and sieving the desired particle size of 0.15 to 1.25 mm.

2. The improved feed grade composition of the zinc salt of bacitracin, prepared according to the process of claim 1.

3. Use of the composition according to claim 2 as an additive to industrially prepared fodder in an amount of 5 to 100 ppm as growth promoter.

**Patentansprüche**

1. Verfahren zur Zubereitung einer verbesserten Zusammensetzung des Zinksalzes von Bacitracin für die veterinäre Verwendung als Wachstumsförderer, dadurch gekennzeichnet, daß man die rohe pulverige Zusammensetzung des Zinksalzes von Bacitracin von Futterqualität, welche Zusammensetzung durch Zusetzen von Zinkionen bei einem pH von 6,5 bis 7 zur Fermentationsbrühe von Bacillus licheniformis sofort nach der Fermentation, durch Zentrifugieren zur Konzentrierung von Zn-Bacitracin, durch Abtrennen und Trocknen des schweren, das Antibiotik enthaltenden Anteils und durch Sprühtrocknen bei einer Eingangstemperatur von 160 bis 250°C erhalten wurde, mit $CaCO_3$ bis zur kommerziellen Aktivität von etwa 70%, mit gegebenenfalls Lignosulfonat bis zu 3% oder Stärke bis zu 70% oder Dextrose bis zu 10% oder Hydroxypropylmethylcellulose bis zu 6% oder Sojamehl bis zu 50% unter entsprechender Verminderung von zugesetztem $CaCO_3$, versetzt und bis zur Homogenität rührt; anschließend das Ganze mechanisch preßt, und zwar entweder durch Verdichten Abkühlen der erhaltenen Flokken, Mahlen und Sieben auf die gewünschte Teilchengröße von 0,15 bis 1,25 mm oder durch Pelletieren einer Masse, die mit Dampf bei einer Temperatur von 50 bis 70°C auf eine Feuchtigkeit von 12 bis 17% konditioniert wurde, Abkühlen der erhaltenen Pellets, Mahlen und Sieben der gewünschten Teilchengröße von 0,15 bis 1,25 mm.

2. Verbesserte Zusammensetzung des Zinksalzes von Bacitracin mit Futterqualität, hergestellt gemäß dem Verfahren nach Anspruch 1.

3. Verwendung der Zusammensetzung nach Anspruch 2 als Zusatz zu industriell hergestelltem Futter in einer Menge von 5 bis 100 ppm als Wachstumsförderer.

**Revendications**

1. Procédé de préparation d'une composition améliorée du sel de zinc de bacitracine à usage vétérinaire comme activateur de croissance, caractérisé en ce que, à une composition pulvérulente brute de sel de zinc de bacitracine de qualité alimentaire, obtenue par addition d'ions zinc à un pH de 6,5 à 7 au bouillon de fermentation de Bacillus licheniformis immédiatement après fermentation, centrifugation pour concentrer le sel de zinc de bacitracine, séparation et séchage de la portion lourde, contenant l'antibiotique, par lyophilisation à une température d'admission de 160 à 250°C, il est ajouté et mélangé jusqu'à homogénéité: du $CaCO_3$ jusqu'à une teneur commerciale égale à environ 70%, facultativement un lignosulfonate en une quantité atteignant 3%, ou de l'amidon en une quantité atteignant 70%, ou du dextrose en une quantité atteignant 10%, ou de l'hydroxypropylméthylcellulose en une quantité atteignant 6%, ou bien de la farine de soja en une quantité atteignant 50%, la quantité de $CaCO_3$ ajoutée étant réduite en proportion; l'ensemble est comprimé mécaniquement par compactage, refroidissement des paillettes obtenues, broyage et tamisage au diamètre de particules désiré compris dans l'intervalle de 0,15 à 1,25 mm, ou bien par granulation d'une masse qui a été conditionnée avec de la vapeur d'eau à une température de 50 à 70°C et à une humidité de 12 à 17%, refroidissement des granules obtenus, broyage et tamisage pour parvenir au diamètre de particules désiré compris dans l'intervalle de 0,15 à 1,25 mm.

2. Composition améliorée, de qualité alimentaire, du sel de zinc de bacitracine, préparée conformément au procédé suivant la revendication 1.

3. Utilisation comme activateur de croissance de la composition suivant la revendication 2, sous forme d'un additif, en une quantité de 5 à 100 ppm, à un fourrage préparé industriellement.